# EUROPEAN PATENT APPLICATION

(11) **EP 4 648 242 A1**
(43) Date of publication of application: **12.11.2025**
(21) Application number: 25174943.8
(22) Date of filing: 08.05.2025
(51) Int. Cl.: H02G 9/08

(54) **HIGH VOLTAGE CABLE CLEAT WITH CABLE CAM**

(30) Priority: 08.05.2024 US 202418657879
(71) Applicant: Panduit Corp., Tinley Park, Illinois 60487 (US)
(72) Inventor: Bentley, Christopher, Illinois, 60487 (US)
(74) Representative: Roberts, Gwilym Vaughan

(57) **Abstract**

A high voltage cable cleat secures cables in a cable management system. The high voltage cable cleat includes a bottom cleat, a cable cam, and a top cleat. The bottom cleat supports the cable in the cable management system. The bottom cleat has a base with a front, a back, a first end, a second end, a top, a bottom, and a center open area. The cable cam is positioned within the base and is rotatably housed in the center open area of the base. The top cleat is secured to the bottom cleat to secure the cables positioned on the bottom cleat.

## Description

### Field

The present disclosure relates to a cable cleat, and more particularly to a high voltage cable cleat with a cable cam.

### Background

The world is rapidly moving toward renewable energy sources, and the current electrical infrastructure will not be able to sustain the massive demands for more electricity. Efforts are increasingly being made worldwide to meet these new demands. A significant portion of the upgrades going forward will be carried out using large underground high voltage cables.

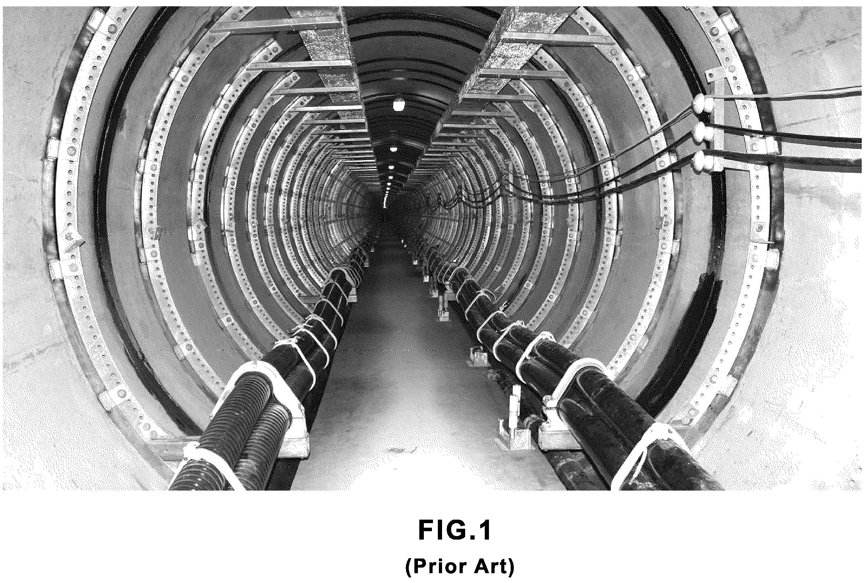

The installation of high voltage cables is an extensive, difficult process due to the sheer size and weight of the cables. Trenches are dug leading to the entry of tunnels. Large spools of cable are placed at the start of the trench and large rollers are placed throughout the trench. The cable is spooled out and pulled by heavy machinery along the rollers. Once the cables have reached entry, they are either pulled alongside of the installed cable cleats lining the tunnel (see FIG. 1) and lifted into the cleats via heavy machinery or pulled through the cleats, using external rollers placed ahead of time. In both methods, the cable cleat tops are removed, and then replaced once the cable is in position. Once the top portion of the cleat is bolted, the cable is secured and protected against a potential short circuit fault. Massive weight and therefore friction between the cleats and cable make the latter portion of the installation arduous. The process of removing and replacing the top cleats adds additional time to the process.

Current high voltage cable cleats are available in various configurations, materials, and sizes. Most cable cleats include two pieces, a top cleat and a bottom cleat secured together around the cable with one or two bolts. Current cable cleats fail to offer any assistance in improving the movement of cables through the cleats during installation. The current installation process requires extra equipment such as rollers, or machinery specific to tunnel projects to guide and assist in pulling the cable through. The extra machinery adds complications as well. The use of rollers adds to the cost and difficulty as well since the rollers takes time to set up and will regularly need to be maintained or replaced. The added difficulty of using rollers also proves to be time consuming.

It would be desirable to provide a cleat for high voltage applications capable of being used in a submerged installation. It would also be desirable to provide an improved cable cleat that facilitates the installation of cables.

### Summary

The invention to which the present European patent relates is defined in the appended claims. The present disclosure is directed to a high voltage cable cleat used to secure cables. The high voltage cable cleat includes a bottom cleat for supporting cables, a cable cam, and a top cleat. The bottom cleat has a base with a front, a back, a first end, a second end, a top, a bottom, and a center open area. The cable cam is positioned within the base and is rotatably housed in the center open area of the base. The top cleat is secured to the bottom cleat to form the high voltage cable cleat.

### Brief Description of the Drawings

FIG. 1 is a perspective view of prior art cleats for a trefoil cable configuration aligned and installed in a tunnel.
FIG. 2 is a perspective view of the high voltage cable cleat of the present disclosure.
FIG. 3 is an exploded view of the high volage cable cleat of FIG. 2.
FIG. 4 is a perspective view of the bottom cleat of the high voltage cable cleat of FIG. 2.
FIG. 5A is a top view of the bottom cleat of FIG. 4.
FIG. 5B is a front view of the bottom cleat of FIG. 4.
FIG. 5C is a left end view of the bottom cleat of FIG. 4.
FIG. 5D is a right end view of the bottom cleat of FIG. 4.
FIG. 6A is a cross sectional view of the bottom cleat taken along line 6A-6A of FIG. 5A.
FIG. 6B is a cross sectional view of the bottom cleat taken along line 6B-6B of FIG. 5A.
FIG. 7A is a right perspective view of the cable cam of FIG. 3.
FIG. 7B is a left perspective view of the cable cam of FIG. 3.
FIG. 8A is a top view of the cable cam of FIG. 7A.
FIG. 8B is a cross sectional view of the cable cam of FIG. 8A taken along line 8B-8B.
FIG. 9A is a right perspective view of the cap for the cable cam of FIG. 3.
FIG. 9B is a left perspective view of the cap for the cable cam of FIG. 3.
FIG. 9C is a front view of the cap of FIG. 9A.
FIG. 9D is a front view of the cap of FIG. 9B.
FIG. 9E is a cross sectional view of the cap taken along line 9E-9E of FIG. 9D.
FIG. 10A is a perspective view of the bottom cleat of FIG. 2 with the cable cam partially rotated to a raised position and the cap extended and rotated.
FIG. 10B is a perspective view of the bottom cleat of FIG. 10A with the cable cam rotated to a raised position and the cap extended.
FIG. 10C is a perspective view of the bottom cleat of FIG. 10B with the cable cam rotated to a raised position and the cap secured in the bottom cleat.
FIG. 11 is a perspective view of the top cleat of FIG. 2.
FIG. 12A is a right perspective view of the high voltage cable cleat of FIG. 2 with the cable cam in a vertical position.
FIG. 12B is a left perspective view of the high voltage cable cleat of FIG. 2 with the cable cam in a vertical position.
FIG. 13 is a top view of the high voltage cable cleat of FIG. 12 A.
FIG. 14A is a cross sectional view of the cable cleat of FIG. 13 taken along line 14A-14A.
FIG. 14B is a cross sectional view of the cable cleat of FIG. 13 taken along the line 14B-14B.
FIG. 15A is a left perspective view of the high voltage cable cleat of FIG. 2 with the cable cam rotated to a raised position and a cable configuration positioned on the cable cleat.
FIG. 15B is a perspective view of the high voltage cable cleat of FIG. 15A with the cable cam lowered and a cable configuration positioned on the cable cleat.
FIG. 16A is a cross sectional view of the cable cleat of FIG. 15A taken along line 16A-16A.
FIG. 16B is a cross sectional view of the cable cleat of FIG. 15C taken along line 16B-16B.

### Detailed Description

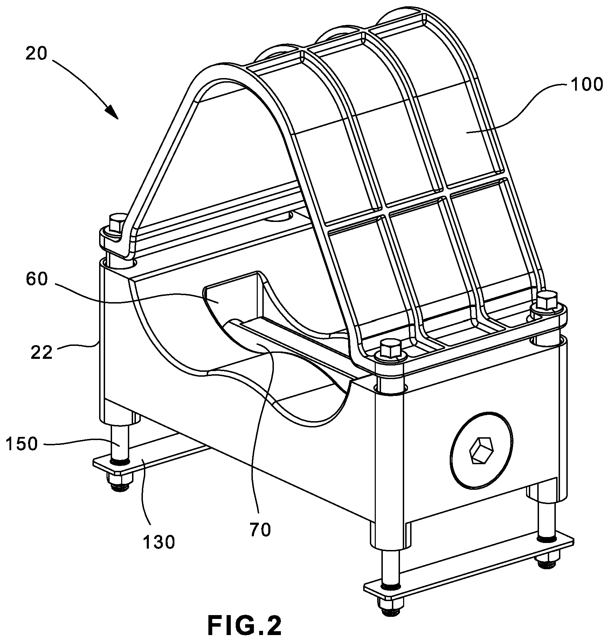

FIG. 2 illustrates the high voltage cable cleat 20 of the present disclosure. A number of high voltage cable cleats 20 can be aligned to form a cable management system. The high voltage cable cleat 20 includes a bottom cleat 22, a top cleat 100, fixing straps 130, and a plurality of fasteners 150. As described below, the bottom cleat 22 includes a cable cam 70 that aids in cable installation for the cable management system.

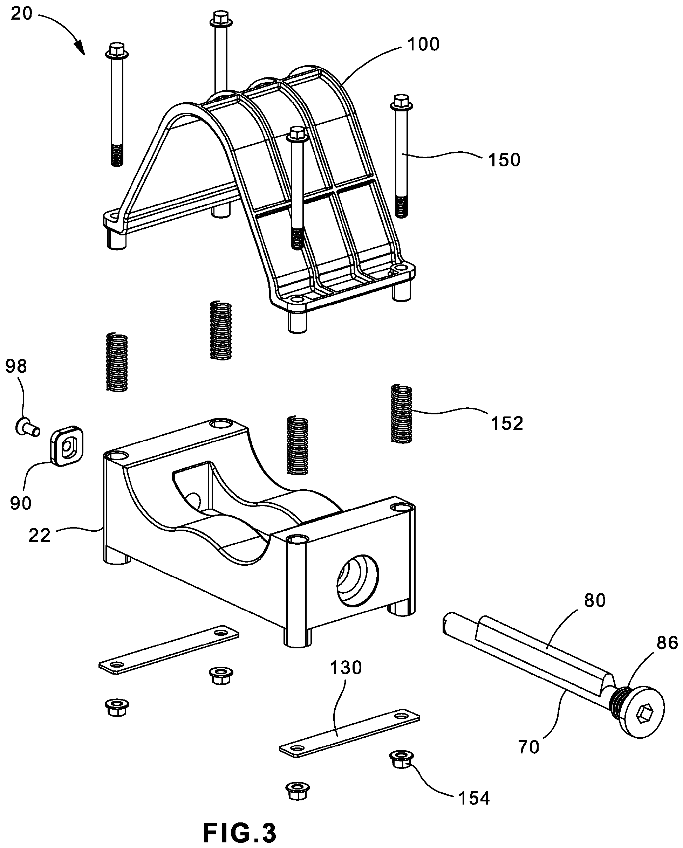

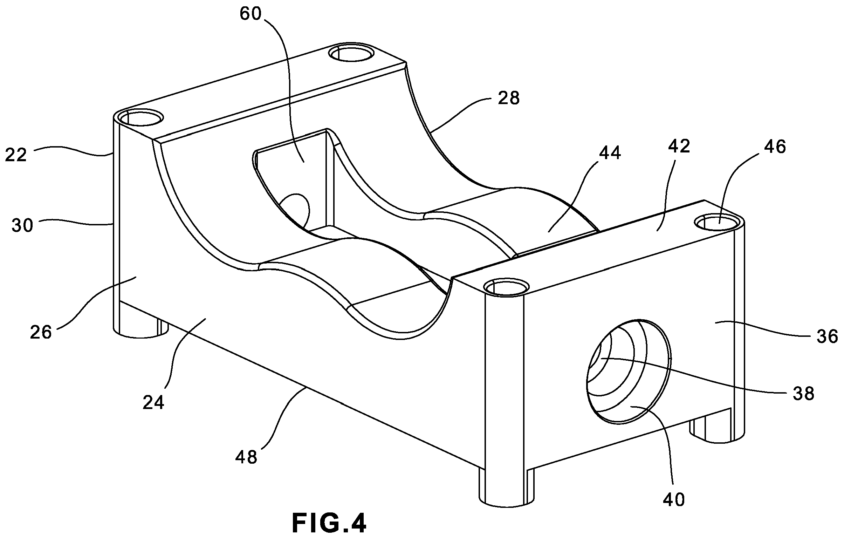

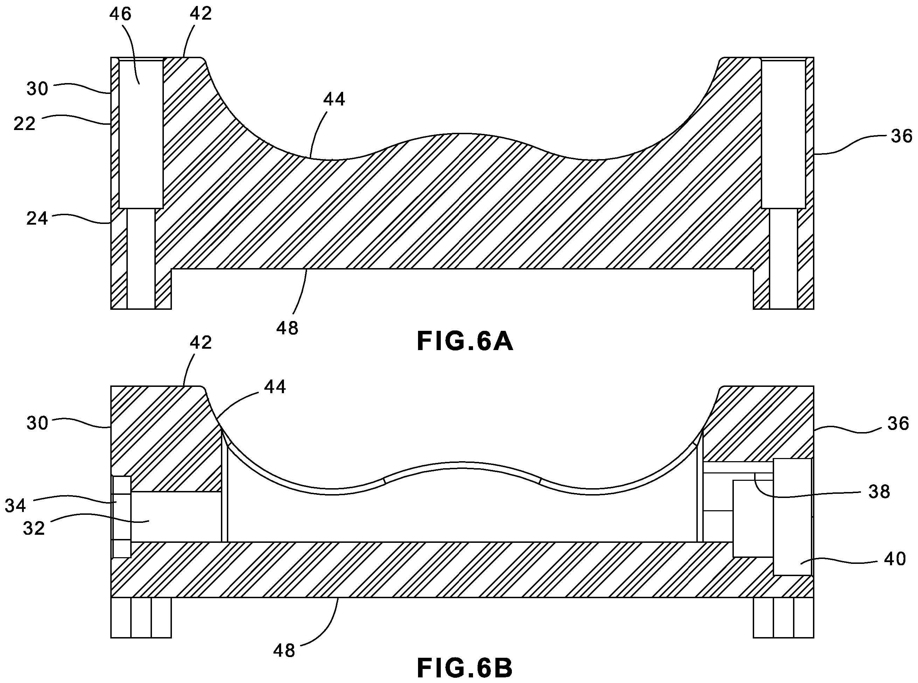

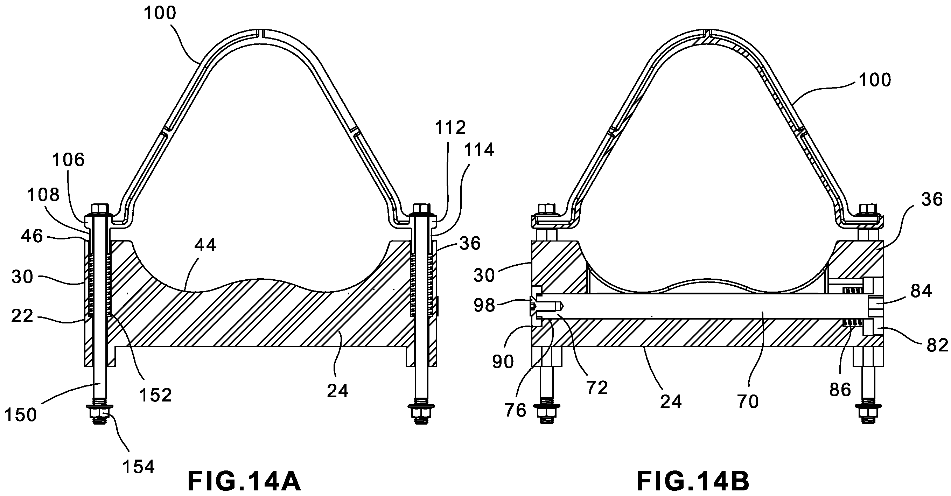

FIG. 3 illustrates an exploded view of the high voltage cable cleat 20. As seen in FIGS. 3-6B, the bottom cleat 22 includes a base 24 with a front 26, a back 28, a first end 30, a second end 36, a top 42 and a bottom 48. The top 42 includes a curved cable support surface 44 designed to receive and hold cables in a trefoil cable configuration. The top 42 also includes cylindrical mount openings 46 located near the first end 30 and the second end 36 of the base 24. The cylindrical mount openings 46 extend from the top 42 of the base 24 to the bottom 48 of the base 24. As illustrated in FIG. 3 and FIG. 14A, each cylindrical mount opening 46 is designed to house a fastener 150 and a spring 152. The fasteners 150 extend beyond the cylindrical mount openings 46 and through the fixing strap 130. As illustrated in FIG. 2, nuts 154 secure the fasteners 150 fed through the fixing strap 130.

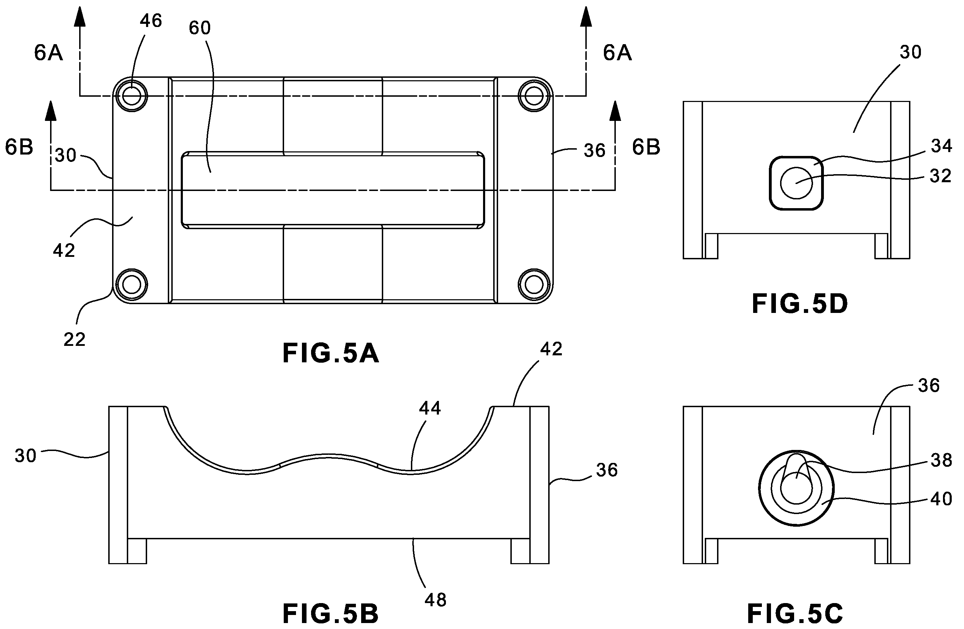

The base 24 includes a center open area 60 designed to house the cable cam 70. The first end 30 of the base 24 includes a circular hole 32 and a rectangular recessed pocket 34 (see FIG. 5C). The second end 36 of the base 24 includes a cone shaped opening 38 with a recessed circular pocket 40 (see FIG. 5D). As described below, the cable cam 70 is installed in the base through the second end of the base and remains positioned with the center open area 60.

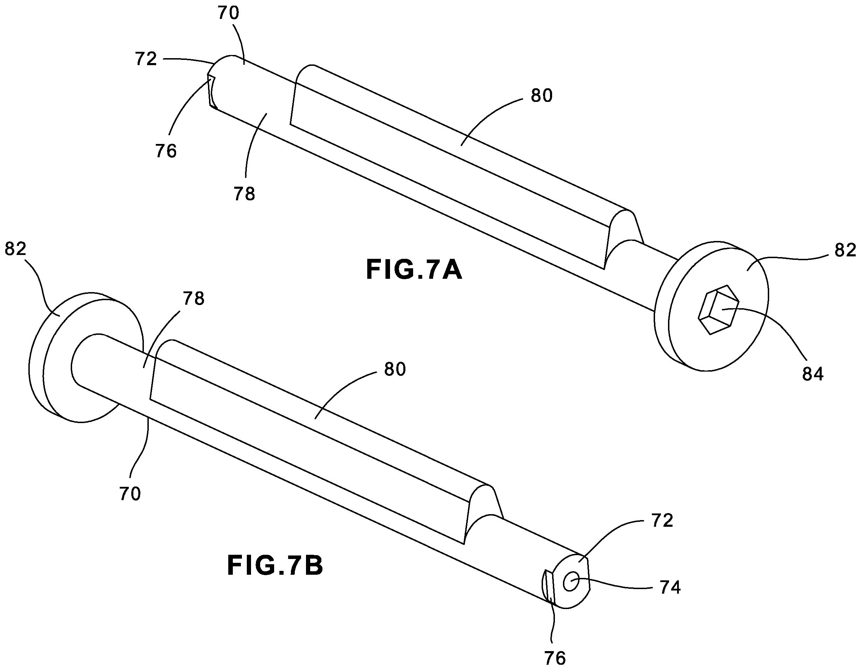

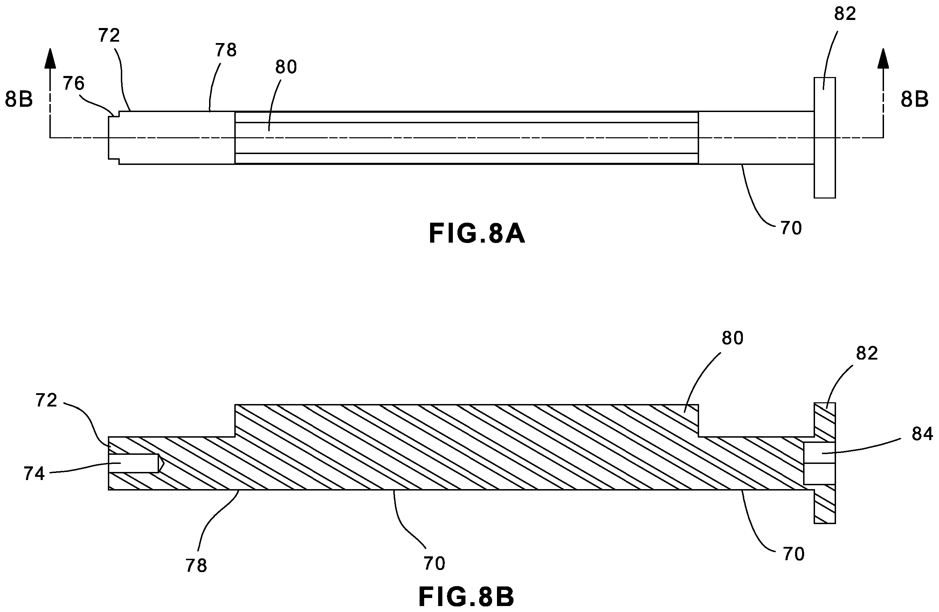

FIGS. 7A-7B and 8A-8B illustrate the cable cam 70 of the present disclosure. The cable cam 70 includes a first end 72, a cylindrical body 78 with a cam projection 80, and a second end 82. The first end 72 includes a center opening 74 for receiving a cap fastener 98 and opposing flat edges 76. The flat edges 76 enable the first end 72 of the cable cam 70 to be captured in the cap 90. A compression spring 86 is positioned between the cam projection 80 and the second end 82 (see FIG. 3). The second end 82 is circular with a hexagonal opening 84 designed to receive a tool (not illustrated).

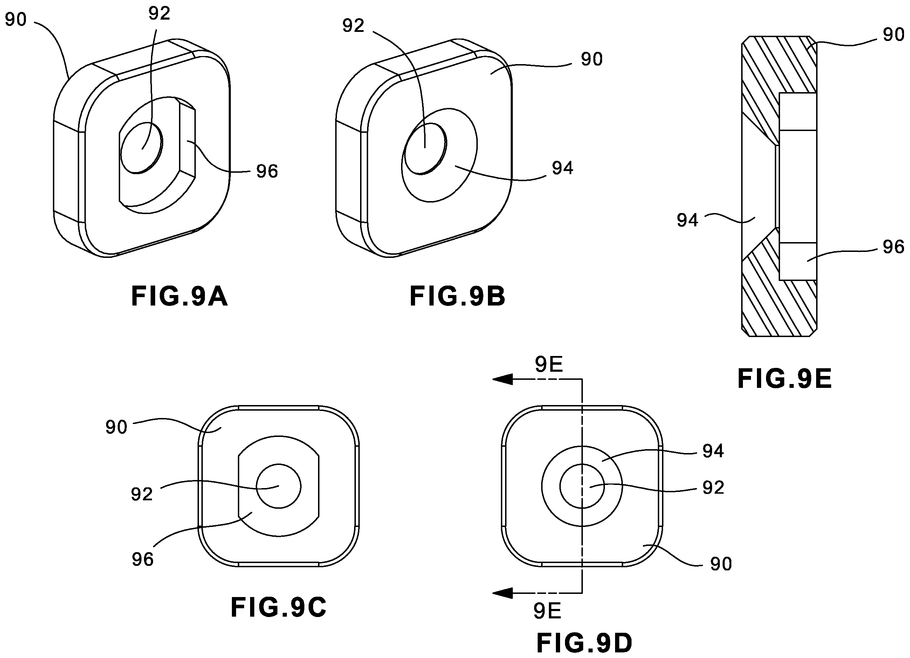

FIGS. 9A-9E illustrate the cap 90 that is positioned within the rectangular pocket 34 of the first end 30 of the base 24 and that engages the first end 72 of the cable cam 70. The cap 90 includes a center hole 92 extending therethrough, a conical pocket 94 and an oblong pocket 96. As illustrated in FIGS. 3 and 14B, the cap 90 receives a fastener 98 that engages the conical pocket 94 and is positioned within the center opening 74 of the first end 72 of the cable cam 70. The first end 72 of the cable cam 70 engages the oblong pocket 96 when the cable cam 70 and the cap 90 are installed in the base 24 of the bottom cleat 22.

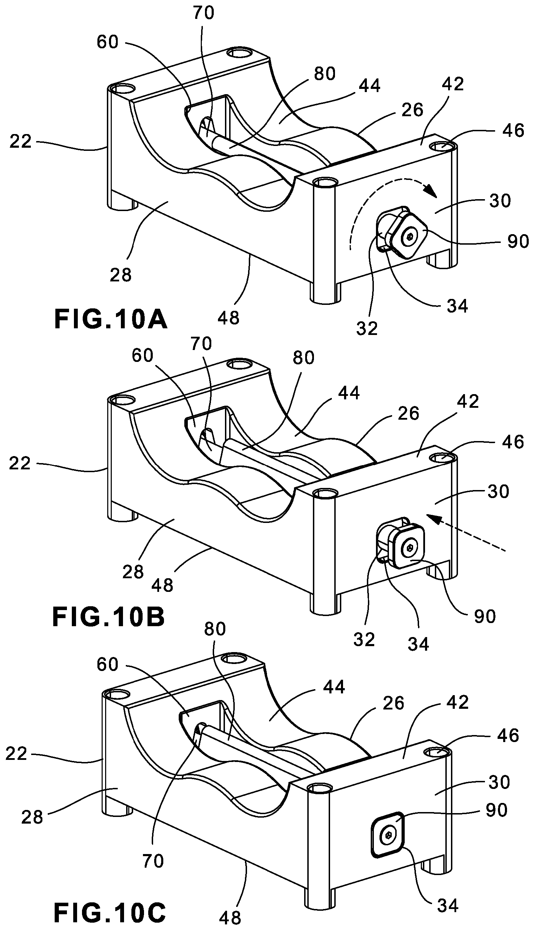

FIGS. 10A-10C illustrate the bottom cleat 22 of the present disclosure with the cable cam 70 installed therein. The cable cam 70 is designed to be rotated within the center open area 60 of the base 24. A tool engages the hexagonal opening 84 in the second end 82 of the cable cam 70 to push the spring loaded cable cam 70 and disengage the cap 90 from the first end 30 of the base 24 of the bottom cleat 22 as illustrated in FIG. 10A. The tool rotates which in turn rotates the cable cam 70 and attached cap 90. Once the cable cam 70 has been rotated to an installation position with the cam projection 80 extending upwards beyond the curved cable support surface 44 of the top 42 of the base 24, the tool releases the cable cam 70 returning the cap 90 to the pocket 34 in the first end 30 of the base 24 of the bottom cleat 22 (see FIGS. 10B-10C). When the cap 90 is positioned in the pocket 34 in the first end 30 of the base 24, the cable cam can no longer rotate. The vertically extending cam projection 80 provides a smooth low friction support and guide for the cables being pulled to facilitate cable installation in the cable management system.

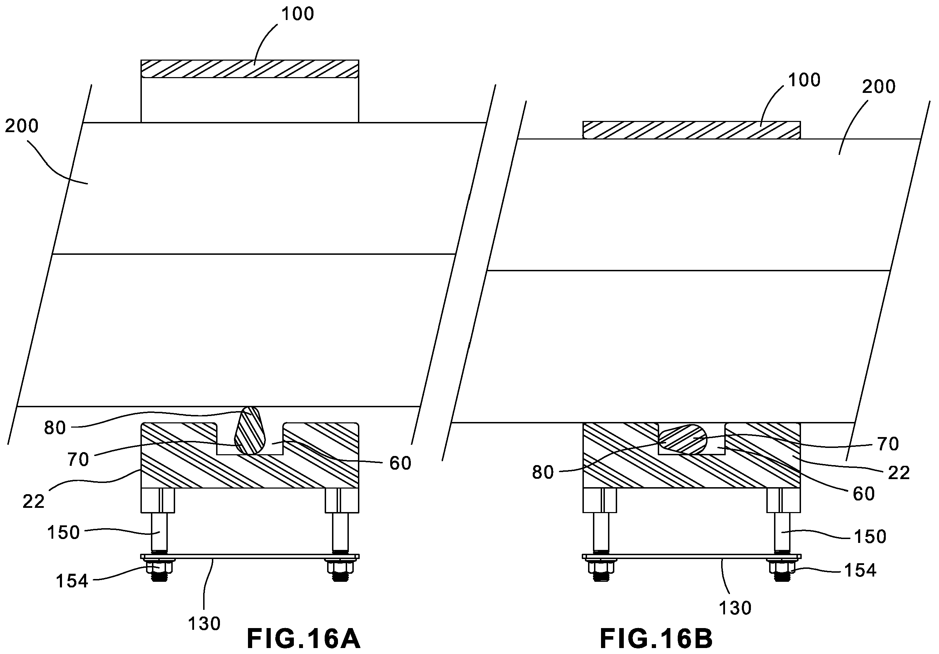

The tool can be disengaged from the hexagonal opening 84 of the second end 82 of the cable cam 70 while cables are installed in the cable management system. As discussed below, once the cables have been installed, the tool will be reinstalled to rotate the cable cam 70 to an installed position (see FIG. 16B).

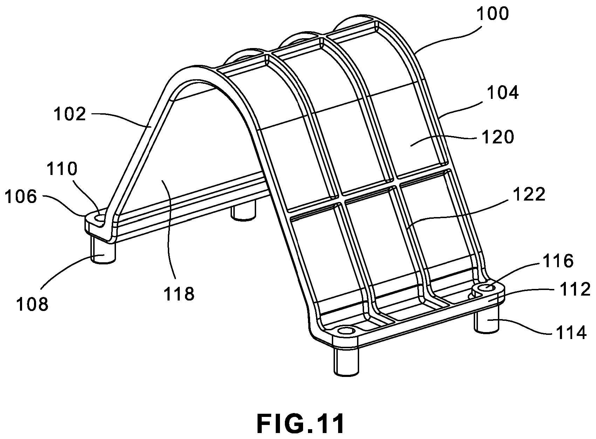

FIG. 11 illustrates the top cleat 100 of the present disclosure. The top cleat 100 includes a front 102, a back 104, a first end 106, a second end 112, an inner surface 118, and an outer surface 120. The outer surface 120 includes a plurality of strengthening ribs 122. The first end 106 and the second end 112 include cylindrical posts 108, 114 with an opening 110, 116, respectively, therethough. The openings 110, 116 receive the fasteners 150 that secure the top cleat 100 to the bottom cleat 22 and fixing strap 130. The cylindrical posts 108, 114 are positioned at the corners of the top cleat 100 and align with and are installed in the cylindrical mount openings 46 in the base 24 of the bottom cleat 22 when the top cleat 100 is positioned on the bottom cleat 22.

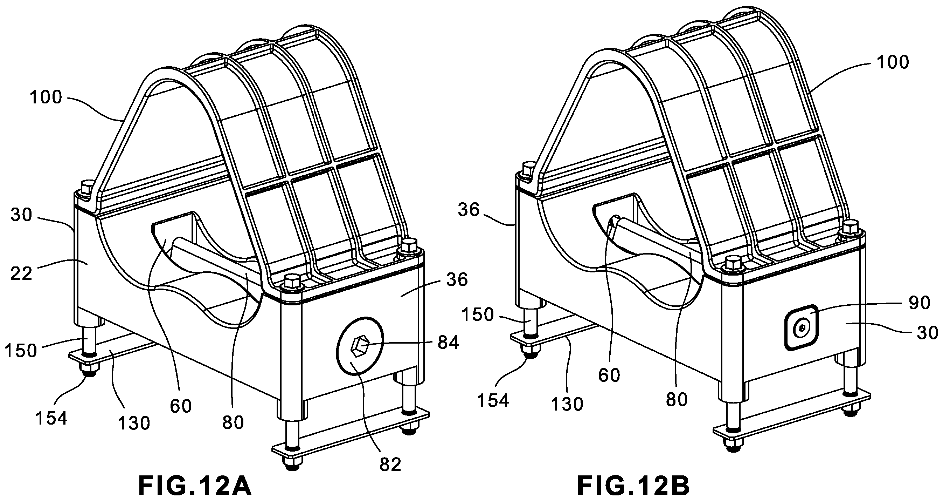

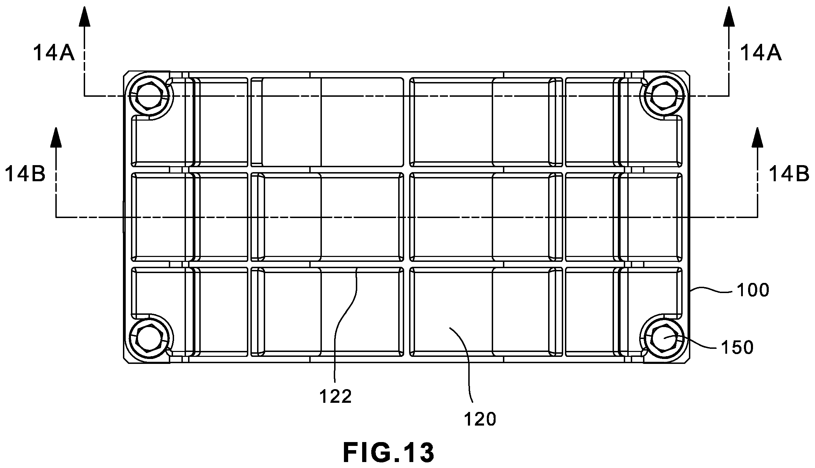

FIGS. 12A-14B illustrate an assembled high voltage cable cleat 20 of the present disclosure. As illustrated in FIG. 14A, the top cleat 100 is secured to the bottom cleat 22 with spring loaded fasteners 150. As illustrated in FIG. 14B, the cable cam 70 is positioned within the bottom cleat 22. The cable cam 70 is spring loaded and can be pushed with a tool to disengage the cap 90 from the bottom cleat 22, as discussed above.

As discussed above, to prepare the high voltage cable cleat for cable installation, the cable cam 70 is rotated to position the cam projection 80 in the installation position extending vertically above the curved cable surface 44. The top cleat 100 can either remain with the high voltage cleat assembly suspended on the springs in a raised position for cable installation (see FIG. 14A) or the top cleat 100 can be removed from the high voltage cleat assembly during cable installation.

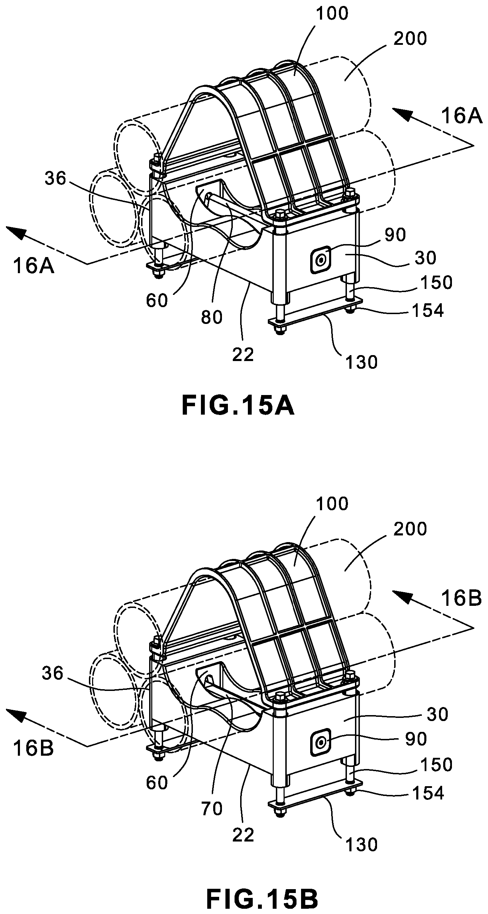

Cables are positioned on the cable cleats 20 by pulling. A pulling rope is laced through the high voltage cable cleat. A cable sock is then attached to one end of the cable to be pulled. The rope is tied to the cable sock enabling the cable to be pulled through the bottom cleat 22. The cable configuration illustrated in FIGS. 15A-15B is represented in dashed lines to also illustrate the elements of the cable cleat. As illustrated in FIGS 15A and 16A, the cam projection 80 engages the cables 200 being installed on the cable cleat 20.

Once the cables 200 have been positioned in the desired position (FIGS. 15A and 16A), the cam projection 80 can be lowered using the tool to push and turn the cable cam 70 to an installed position with the cam projection 80 in a horizontal plane (See FIGS. 15B and 16B) to avoid unwanted loading on the cables when clamped. Once the cables 200 have been installed, the top cleat 100 (if it was removed) can be secured to the bottom cleat 22 using the fasteners 150 which also pass through the fixing straps 130. The last part of the installation is to tighten the fasteners 150 and compress the springs 152 to secure the high voltage cable cleat around the cables.

The cable cleat of the present disclosure would be a non-hygroscopic polymer or similar material capable of being used in a submerged installation without significant degradation of material properties. The cable cleat of the present disclosure is also appropriately sized to accommodate specific cable diameters and have radiused edges in all potential cable contact areas.

Furthermore, while the particular preferred embodiments of the present disclosure have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the invention is intended to be defined in the following claims when viewed in their proper perspective based on the prior art.

## Claims

1. A high voltage cable cleat for securing cables, the high voltage cable cleat comprising:
a bottom cleat for supporting cables, the bottom cleat has a base with a front, a back, a first end, a second end, a top, a bottom, and a center open area;
a cable cam positioned within the base and rotatably housed in the center open area of the base; and
a top cleat secured to the bottom cleat.

2. The high voltage cable cleat of claim 1, wherein the top of the base has a curved cable support surface for supporting cables.

3. The high voltage cable cleat of any preceding claim, wherein the top of the base has cylindrical mount openings extending from the top to the bottom of the base, whereby the cylindrical mount openings receive spring loaded fasteners to secure the high voltage cable cleat.

4. The high voltage cable cleat of any preceding claim, wherein the first end of the base includes a circular hole and a recessed pocket and the second end of the base includes a cone shaped opening with a recessed pocket for receiving the cable cam.

5. The high voltage cable cleat of any preceding claim, wherein the cable cam includes a first end, a cylindrical body with a cam projection, and a second end.

6. The high voltage cable cleat of claim 5, wherein the cam projection is rotated from a horizontal position within the center open area to a vertically extended position above the top of the base.

7. The high voltage cable cleat of any of claims 5 to 6, wherein the first end of the cable cam includes a center opening for receiving a fastener and opposing flat edges,
optionally further comprising a cap with a conical pocket and an opening for receiving the fastener and an oblong pocket for engaging the first end of the cable cam,
further optionally wherein the first end of the base includes a circular hole and a recessed pocket; the recessed pocket houses the cap.

8. The high voltage cable cleat of any of claims 5 to 7, wherein a compression spring is positioned on the cable cam between the cam projection and the second end.

9. The high voltage cable cleat of any of claims 5 to 8, wherein the second end of the cable cam is circular with a hexagonal opening,
optionally wherein the second end of the base includes a cone shaped opening that receives the cable cam and a recessed pocket that houses the second end of the cable cam.

10. The high voltage cable cleat of any preceding claim, further comprising fixing straps for securing the high voltage cable cleat to a surface.

11. The high voltage cable cleat of any preceding claim, wherein the top cleat has an outer surface with a plurality of strengthening ribs.

12. The high voltage cable cleat of any preceding claim, wherein the top cleat has cylindrical posts with openings for receiving fasteners.
optionally wherein the top of the base has cylindrical mount openings extending from the top to the bottom of the base, the cylindrical mount openings receive the cylindrical posts of the top cleat and spring loaded fasteners to secure the high voltage cable cleat.

13. A method of assembling a high voltage cable cleat for cable installation, the method of assembling comprising the steps of:
providing a bottom cleat having a base with a front, a back, a first end, a second end, a top, a bottom, and a center open area;
providing a cable cam positioned within the base in the center open area and extending from the first end to the second end of the base, wherein the cable cam has a first end, a cam projection, a compression spring, and a second end;
providing a cap secured to the first end of the cable cam and positioned within the first end of the base;
engaging the second end of the cable cam to disengage the cap from the first end of the base; and
rotating the cable cam to position the cam projection vertically extending above the top of the base within the center open area.

14. The method of assembling of claim 13, further comprising the step of disengaging the second end of the cable cam to replace the cap on the first end of the base and secure the cable cam with the cam projection vertically extending within the center open area; and installing cables on the bottom cleat, wherein the cam projection engages the cables.

15. The method of assembling of claim 14, wherein after cables are installed on the bottom cleat, reengaging the second end of the cable cam to disengage the cap from the first end of the base and rotating the cable cam until the cam projection extends horizontally within the center open area of the base,
optionally, the method further comprising the step of installing a top cleat over the cables; and securing the top cleat to the bottom cleat.
